# EUROPEAN PATENT SPECIFICATION

(11) **EP 4 017 823 B1**
(45) Date of publication and mention of the grant of the patent: **17.07.2024**
(21) Application number: 20812418.0
(22) Date of filing: 20.11.2020
(51) Int. Cl.: B65H 75/44

(54) **REELING DEVICE**
SPULENVORRICHTUNG
DISPOSITIF DE BOBINAGE

(30) Priority: 21.11.2019 GB 201916981
(43) Date of publication of application: 29.06.2022
(73) Proprietor: Richardson, Ewart, Chorleywood, Hertfordshire WD3 5HT (GB)
(72) Inventor: Richardson, Ewart, Chorleywood, Hertfordshire WD3 5HT (GB)
(74) Representative: Dolleymores
(86) International application number: PCT/GB2020/052971
(87) International publication number: WO 2021/099800

(56) References cited:
- EP-A1- 2 768 100
- DE-A1- 2 803 509
- DE-A1- 3 008 544
- GB-A- 866 756

## Description

The present invention relates to a reeling device. In particular to a reeling device for the controlled coiling and uncoiling of a cable, which has the facility to lift and lower a load connected to an end of the cable. The present invention therefore relates to a reeling/lifting device.

GB 866756 relates to a winding mechanism for electrical cable, hose or other flexible elongated member comprising rotatable and non-rotatable drums.

It is widely known in the art to wind and unwind cables from a reeling device, wherein one end of the cable is fixed relative to the remainder of the cable, for providing a stationary electrical connection location, and the other end of the cable can be unreeled for deploying a desired length of cable. Such devices may be used when it is desired to lower and raise a device from a ceiling or otherwise. These devices must however make provision to avoid the stationary portion of the cable from twisting, kinking and ultimately failing as the reel is rotated during winding and unwinding of the cable.

There are two known solutions in the reeling device art.

In a first solution, slip rings are used to provide an electrical connection between the stationary and rotatable portions of the cable. A problem with slip rings, however, is that they can be the source of undesirable electrical noise and intermittent electrical contact. This is a particular concern when such a reeling device is used in connection with audio and data cables.

In a second solution, an arrangement such as that disclosed in US 5,526,997 is used. This arrangement comprises main and secondary reels that include a common hub member that is formed with a hole extending therethrough from the main reel to the secondary reel. The cable is wound upon the two reels with a first end portion of the cable being coiled upon the main reel, an intermediate portion thereof extending through the hole formed in the common hub member and a second end portion of the cable being coiled about the secondary reel. The second end portion of the cable is substantially shorter than the first end portion and includes an end that is fixed to the housing. With this arrangement, as the first portion of the cable is fully unwound from the main reel, the second portion of the cable is simultaneously unwound from and then rewound onto the secondary reel. A variation on this scheme uses a twin rotating reel and a rotating guide sheave to feed the cable from one of the rotating reels to a fixed reel and a further variation uses a twisting cable chain. Whilst these arrangements avoid the need for slip rings, they introduce alternative problems. The cable is usually coiled on the main reel in successive radial layers. This renders accurate positioning difficult, with accuracy decreasing over time due to compression of the cable. Such arrangements also require a 'standing' length of cable to be retained in the device (in some cases equal to or greater than the stroke of the device). In some applications, overall cable length can be critical and, in the invention described below, only a relatively tiny amount of cable is not actually deployed in the stroke of the device.

The present invention arose in an attempt to provide a reeling device that addresses the above problems with the prior art.

According to the present invention in a first aspect there is provided a reeling device for the controlled coiling and uncoiling of a cable having a first end that is fixed and a second end that is movable relative to the first end, the cable is unbroken between its first and second ends, the reeling device comprises first and second reels about which the cable is coiled, wherein the first and second reels are coaxial, the first reel is fixed against rotation and axial movement, and the second reel is rotatable about the axis with such rotation causing axial movement of the second reel relative to the first reel.

The first reel and the second reel therefore have a common axis. Each reel is preferably substantially cylindrical in shape.

The first end of the cable is preferably fixed to allow for a stationary connection to be made. The cable may support any suitable device at its second end. The cable may be an electrical cable or an optic fibre. In one exemplary arrangement a microphone is supported and the cable is an electrical cable. The reeling device is suitable for lifting objects (e.g. a microphone or camera).

An intermediate guide (or first guide) is preferably provided for guiding the cable between the reels. The intermediate guide is preferably rotatable about the axis by a motor. Rotation of the intermediate guide preferably causes axial movement of the intermediate guide.

By such axial movement, the intermediate guide may be suitably axially aligned with the point of the second reel at which the cable is fed on/off the second reel at all times. The intermediate guide further, as it rotates, acts to coil/uncoil the cable from the first reel.

The cable may be guided substantially tangentially with respect to the second reel at all times during reeling and unreeling of the cable.

In a preferred embodiment, the configuration of the intermediate guide is such that the cable is also guided substantially tangentially with respect to the first reel at all times and such that the intermediate guide is also suitably axially aligned with the point of the first reel at which the cable is fed on/off the first reel at all times.

The rotation and/or axial movement of the intermediate guide are preferably proportional to the rotation and/or axial movement of the second reel. The intermediate guide is preferably arranged to coil/uncoil the cable from the first reel and/or the second reel.

A gear drive may be provided for maintaining proportionality of the rotational and axial movement between the second reel and the intermediate guide. The intermediate guide may be driven to rotate by an electric motor.

The intermediate guide may comprise at least one pulley which is preferably mounted for rotation with its radial plane being substantially parallel to the common axis of the reels.

The intermediate guide may comprise an arm, which may comprise one or more guide members for guiding the cable with respect to the first and second reels.

The arm may comprise at least one bridge portion and at least one support portion. The support portion or support portions may be directly or indirectly driven to rotate about the common axis of the reels. The support portion or support portions may extend in a substantially radial or perpendicular direction about the common axis. The bridge portion or bridge portions may extend in a substantially axial direction. Preferably the at least one bridge portion extends in a direction which is substantially perpendicular to the direction in which the at least one support portion extends. The bridge portion of the arm is configured to connect the guide members.

The arm preferably comprises first and second guide members, wherein the first guide member overlaps with the first reel when viewed in a radial direction and the second guide member overlaps with the second reel when viewed in a radial direction.

The first and second guide members may be located at or adjacent opposing ends of the bridge portion of the arm.

The points of the first and second guide members at which the cable is fed on/off the first and second guide members are preferably respectively axially aligned with the first and second reels at the points at which the cable is fed on/off the first and second reels.

One or more guide members may each comprise one or more pulleys. Each pulley is preferably mounted for rotation with its radial plane being substantially parallel to the common axis of the reels.

The one or more guide members are preferably retained in tangential alignment with the first and second reels respectively at all times.

In one embodiment, the first and second reels have the same diameter. Preferably, the rotation and axial movement of the second reel are double the speed of the rotation and axial movement of the intermediate guide.

In another embodiment, the first and second reels have different diameters. For example, the diameter of the first reel is smaller than the diameter of the second reel. The second reel may be arranged to surround at least a portion of the first reel in at least one axial position of the second reel.

In the present invention, the cable is preferably helically coiled about each of the first and second reels in a single layer without overlap.

The first reel and/or the second reel may comprise a helical groove for receiving the cable.

An end guide (or second guide) may be provided for guiding the cable on and off the second reel. The end guide may be fixed against axial movement. The end guide may comprise a guide wheel.

The reeling device of the present invention may comprise an electromagnetic brake on an output side of a motor drive gearbox. The electromagnetic brake may be directly connected to the first reel.

In one embodiment of the invention, a plurality of intermediate guides for guiding a plurality of cables between the first and second reels is provided, wherein each intermediate guide is arranged to guide a respective one of the plurality of cables between the first and second reels. Each of the intermediate guides may be fixed for rotation with the other intermediate guides.

In this embodiment, each of the intermediate guides is preferably rotationally fixed with respect to the other intermediate guide or intermediate guides, such that the intermediate guides are rotatable about the axis with each other. To achieve this, the intermediate guides may all be fixed with respect to each other to form a unitary intermediate guide assembly. In some embodiments, the intermediate guides may be fixed to one or more supports. Rotation of the support(s) thus effects rotation of the intermediate guides.

In one embodiment, each of the plurality of intermediate guides comprises an arm which comprises first and second guide members. Each arm may comprise a bridge portion and one or more support portions. In a preferred embodiment, the arms have at least one common support portion for supporting the bridge portions of each arm.

According to the present invention in a further aspect, there is provided a system comprising a plurality of reeling devices in accordance with the first aspect of the present invention and a frame or device that is attached at the second ends of the cables of the plurality of reeling devices, wherein a controller is provided for synchronously coiling/uncoiling the cables for raising or lowering the frame or device.

Non-limiting embodiments of the present invention will now be described, by way of example only, with reference to the accompanying drawings, in which:
Figure 1 is a front perspective view of a reeling device according to a first embodiment of the present invention;
Figure 2 is a rear perspective view of the reeling device of Figure 1;
Figures 3a and 3b are front views of the reeling device of Figure 1 with the cable fully coiled and fully uncoiled, respectively; and
Figure 4 is a sectional front view of the reeling device of Figure 1;
Figure 5 is a front view of the reeling device of Figure 1, in which an alternative arrangement of the intermediate guide is provided;
Figure 6 is a sectional front view of a reeling device according to a second embodiment of the present invention;
Figure 7 is a front perspective view of a reeling device according to a third embodiment of the present invention;
Figure 8 is a front perspective view of a reeling device according to a fourth embodiment of the present invention; and
Figures 9a and 9b are sectional front views of the reeling device of Figure 8, with the second reel in first and second axial positions, respectively.

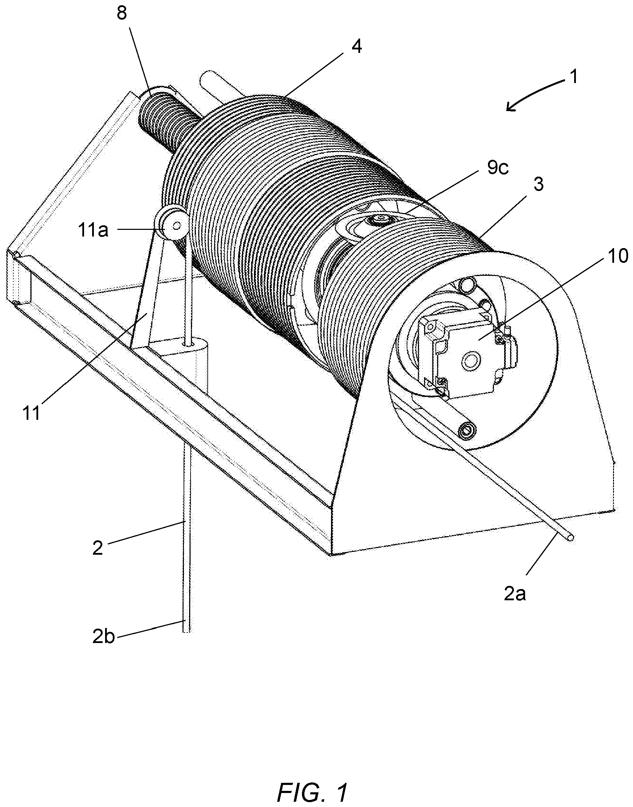

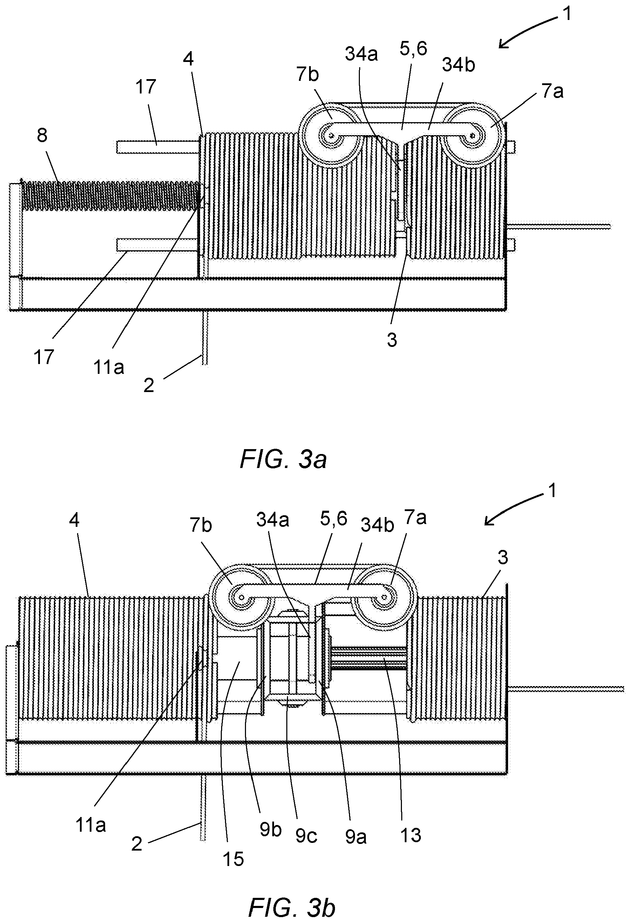

With reference to Figures 1 to 4, there is shown a reeling device 1 according to a first embodiment of the present invention. The reeling device 1 is configured for the controlled coiling and uncoiling of a cable 2 having a first end 2a that is fixed and a second end 2b that is movable relative to the first end. The first end 2a is fixed to allow for a stationary connection to be made. The cable may support any suitable device at its second end. The cable may be an electrical cable or an optic fibre. In one exemplary arrangement a microphone (not shown) is supported and the cable 2 is an electrical cable. The cable 2 is unbroken between its first and second ends. The reeling device 1 comprises first and second reels 3, 4 about which the cable 2 is coiled. Figure 3a shows the cable 2 fully wound/coiled and Figure 3b shows the cable 2 fully unwound/uncoiled. The first and second reels 3, 4 are coaxial. The first reel 3 is fixed against rotation and axial movement. The second reel 4 is rotatable about the axis with such rotation causing axial movement of the second reel 4 relative to the first reel 3.

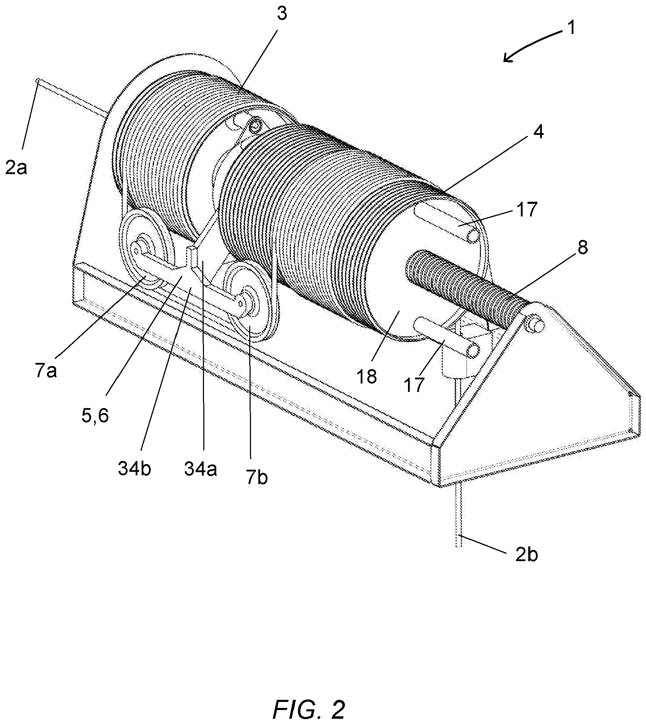

An intermediate guide 5 is provided for guiding the cable 2 between the reels 3, 4. The intermediate guide 5 in the present arrangement is rotatable about the axis, as is preferred. By such an arrangement, as seen in Figure 2, the cable 2 can be guided substantially tangentially with respect to the second reel 4 at all times during reeling and unreeling of the cable. As is further preferred, rotation of the intermediate guide 5 in the present arrangement causes axial movement of the intermediate guide 5. By such axial movement, as seen in Figures 3a and 3b, the intermediate guide 5 is suitably axially aligned with the point of the second reel 4 at which the cable is fed on/off the second reel 4 at all times. The rotation and axial movement of the second reel 4 are preferably proportional to the rotation and axial movement of the intermediate guide 5 to achieve such a desired effect.

The intermediate guide 5, further, as it rotates, acts to coil/uncoil the cable from the first reel. In the present arrangement, as is preferred, the configuration of the intermediate guide 5 is such that the cable 2 is also guided substantially tangentially with respect to the first reel 3 at all times and such that the intermediate guide 5 is also suitably axially aligned with the point of the first reel 3 at which the cable is fed on/off the first reel 3 at all times.

In the present arrangement, the intermediate guide 5 comprises an arm 6 which comprises first and second guide members 7a, 7b. The arm 6 further comprises a support portion 34a (shown in a vertical orientation in figures 3a and 3b) and a bridge portion 34b (shown in a horizontal orientation in figures 3a and 3b). The support portion is directly or indirectly driven to rotate, by an electric motor in this embodiment. The first and second guide members 7a, 7b are located at or adjacent opposing ends of the bridge portion 34b of the arm 6.

The first guide member 7a guides the cable 2 with respect to the first reel 3 and the second guide member 7b guides the cable 2 with respect to the second reel 4. For such purposes, the first guide member 7a overlaps with the first reel 3 when viewed in a radial direction and the second guide member 7b overlaps with the second reel 4 when viewed in a radial direction. With reference to figure 3a, the first and second guide members fully overlap the first reel and second reels respectively. With reference to figure 3b, the first and second guide members partly overlap the first and second reels respectively.

In accordance with the discussion above, the points of the first and second guide members 7a, 7b at which the cable 2 is fed on/off the first and second guide members 7a, 7b are respectively axially aligned with the first and second reels 3, 4 at the points at which the cable 2 is fed on/off the first and second reels 3, 4.

The first and second guide members 7a, 7b comprise pulleys in the present arrangement, which is preferred to avoid wear on the cable. The guide members 7a, 7b could be otherwise arranged. They could, for example, be non-rotating and have a low-friction surface over which the cable 2 slides. By rotation of the arm 6, the guide members 7a, 7b (and the portion of cable extending between the guide members) maintain tangential alignment with the first and second reels 3, 4 at all times.

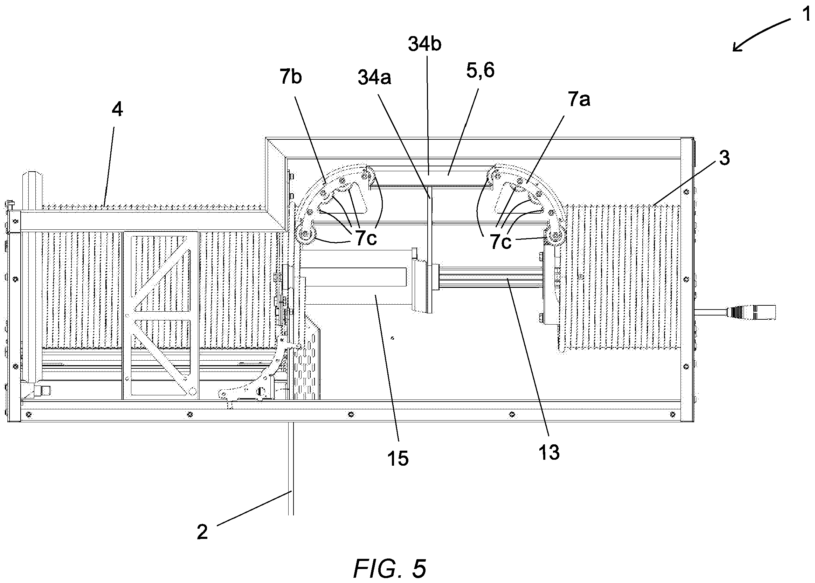

One possible alternative arrangement of the first and second guide members 7a, 7b is shown in Figure 5. Here, the first and second guide members 7a, 7b each comprise a set of pulley sheaves 7c arranged in an arc. By this arrangement, the bend radius of the cable 2 passing over the first and second guide members 7a, 7b is defined by the angle of the arc of the pulley sheaves 7c. This arrangement may be particularly advantageous where the cable 2 has a relatively large minimum allowable bend radius, since the bend radius of the cable 2 can be increased without the need to use excessively large pulleys as the first and second guide members 7a, 7b. In a further alternative arrangement, the first and second guide members 7a, 7b could be replaced with a single larger pulley. In such a case, the points of the pulley at which the cable 2 is fed on/off the pulley will be respectively axially aligned with the first and second reels 3, 4 at the points at which the cable 2 is fed on/off the first and second reels 3, 4. In other words, the diameter of the single pulley would be suitably set.

In the present arrangement, as is preferred, the first and second reels 3, 4 have the same diameter as one another. This has a number of benefits, as will be readily appreciated by those skilled in the art, including simplifying the construction of the device. In alternative arrangements, however, the reels 3, 4 could have different diameters. With the first and second reels 3, 4 having the same diameter as one another, the rotation and axial movement of the second reel 4 will be double the speed of the rotation and axial movement of the intermediate guide 5 for maintaining positioning of the guide, as discussed above, with respect to the first and second reels 3, 4. The proportional speeds (rotationally and axially) will vary with relative changes to the diameters of the first and second reels 3, 4, as will be readily appreciated by those skilled in the art.

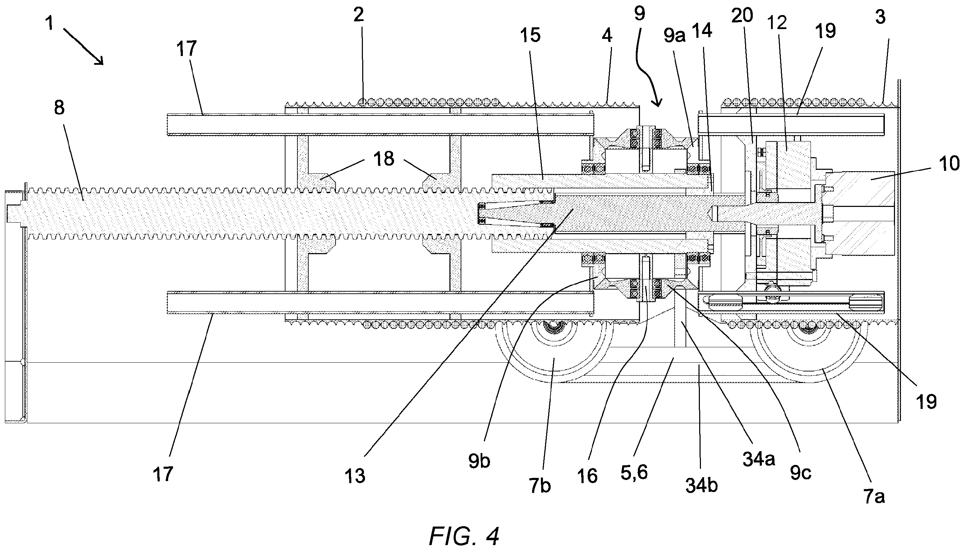

In the present arrangement, as best seen in Figure 4, the intermediate guide 5 is rotatably driven by an electric motor 10. The motor 10 is preferably directly coupled (i.e. connected in a manner that does not rely on friction and so will not slip) to the intermediate guide 5. The motor 10 preferably comprises a servomotor. The servomotor may be combined with a gearbox in a single package to provide a servo drive. The motor/servo drive 10 is preferably housed within a drum of the first reel 3 as seen in Figures 1 and 4. A positional encoder will preferably be provided, which may take any suitable conventional form. Axial movement of the intermediate guide 5 is effected by virtue of a lead screw 8. A gear drive 9 is provided for transmitting rotary force to the second reel 4. Axial movement of the second reel 4 is also effected by the lead screw 8.

The gear drive 9 ensures that proportional rotational (and axial) movement between the second reel 4 and the intermediate guide 5 is maintained, which is preferable. In alternative arrangements, however, the gear drive 9 may be omitted. In arrangements omitting the gear drive 9, the second reel 4 will be loose with rotation of the second reel 4 effected by the frictional connection to the reeling and unreeling of the cable 2 alone.

One or more brakes are preferably provided. It is particularly preferable, as in the present arrangement, that a holding brake 12 is provided on the output side of the motor/drive gearbox (if used). Such a brake is preferably directly connected to a drum of the first reel 3, as shown in Figure 4. The brake 12, preferably comprises an electromagnetic brake, as again shown in Figure 4. The electromagnetic brake may take any conventional form. There may be additional brakes provided and/or positive-break direct struck limit switches.

As clearly shown in the figures, the cable 2 is helically coiled about each of the first and second reels in a single layer without overlap. This helps ensure accuracy throughout the life of the device. Either or both of the first and second reels 3, 4 may be provided with a helical groove for guiding/aligning the cable 2 as it is coiled, wherein the cable is received by the groove. In the present arrangement, both reels 3, 4 are provided with helical grooves. In alternative arrangements, the helical grooves may be omitted entirely.

With the axial movement of the second reel 4, as discussed, it is possible to provide a zero fleet reeling device, i.e. a device where the radial and axial location and the orientation of the portion of the cable adjacent the second end of the cable 2 that is fed on/off the second reel 4 does not change during reeling unreeling of the cable. This is again preferred for the purpose of ensuring accurate operation and ease of installation, for example where the cable is required to drop though a small hole in a ceiling. An end guide 11 is preferably provided for guiding the cable on/off the second reel 4. The end guide 11 is fixed against axial movement. In the present arrangement, the end guide 11 comprises a guide wheel 11a.

The drive mechanism will now be described in greater detail. It must be appreciated, however, that numerous modifications may be made without impacting the operation of the reeling device 1, as fundamentally defined by Claim 1. The present invention is not to be limited to the exemplary drive mechanism described.

The motor/servo drive 10 rotates a splined shaft 13. The splined shaft 13 is fixed against axial movement. The lead screw 8 is fixed against both rotation and axial movement. A splined bush 14 engages the spline of the splined shaft 13. The splined bush 14 is fixed to a hollow shaft 15 that receives the splined shaft 13. The hollow shaft 15 threadably engages the lead screw 8. The intermediate guide 5 is fixed to the hollow shaft 15.

By the above arrangement, rotation of the splined shaft 13 effects rotation and axial movement of the intermediate guide 5.

As discussed, in the present arrangement, the gear drive 9 is provided. This comprises bevel gears 9a, 9b and 9c as shown in Figure 4. Bevel gears 9a and 9b are mounted on the hollow shaft 15 via bearings to allow relative rotation therebetween. Bevel gear 9a is held against rotation relative to the first reel 3 by guide members 19. In the present arrangement, these are formed as tubes. In alternative arrangements they could be otherwise formed. Bevel gears 9c engage bevel gears 9a and 9b with their axes perpendicular thereto (and perpendicular to the motor/servo drive 10 axis). Bevel gears 9c are mounted on shafts 16 that extend radially outward from the hollow shaft 15 and are fixed to the hollow shaft 15 to rotate therewith. Bevel gears 9c are mounted on the shafts 16 via bearings to allow for suitable rotation. Guide tubes 17, which extend parallel to the motor/servo drive 10 axis are fixed with respect to the bevel gear 9b to rotate therewith. The guide tubes 17 are slidably received by bushes 18 that are fixed to the second reel 4 and are provided inside a drum of the second reel 4. The bushes 18 threadably engage the lead screw 8, which is static. Guide tubes 19 are similarly engaged in bushes within a support flange 20 of the fixed drum 3.

By the above arrangement, rotation of the splined shaft 13 effects rotation and axial movement of the second reel 4.

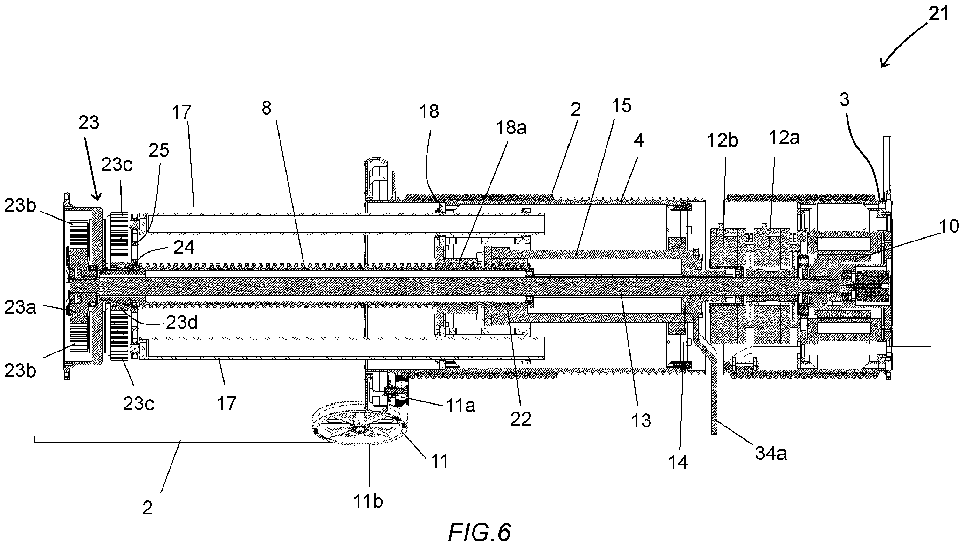

Figure 6 shows a reeling device 21 in accordance with a second embodiment of the present invention, which comprises an alternative drive mechanism to the reeling device 1 of Figures 1 to 4. Corresponding features are indicated with like numerals.

Rotation and axial movement of the intermediate guide 5 are effected by rotation of the splined shaft 13 by the motor/servo drive 10, in substantially the same manner as described above with respect to the first embodiment. Splined bush 14 engages the spline of the splined shaft 13 and is fixed to a hollow shaft 15 that receives the splined shaft 14. In this embodiment, the hollow shaft 15 threadably engages the lead screw 8 via a threaded bush 22. The intermediate guide 5 is fixed to the hollow shaft 15 via the support portion 34a of the arm 6, to rotate therewith.

In place of gear drive 9, an alternative gear drive 23 is provided. Gear drive 23 comprises spur gears 23a, 23b, 23c and 23d. Spur gear 23a is fixed to an end of the splined shaft 13 to rotate therewith. Spur gear 23a engages with spur gears 23b. Spur gears 23c are coaxially fixed to spur gears 23b to rotate therewith. Spur gears 23c engage with spur gear 23d, which is mounted on a shaft portion 24 of the lead screw 8 via bearings to allow for rotation of spur gear 23d about the shaft portion 24. Guide tubes 17 are fixed to spur gear 23d via connecting arm 25, such that the guide tubes 17 rotate with spur gear 23d. The guide tubes 17 are slidably received by a bush 18 that is fixed to the second reel 4 and is provided inside a drum of the second reel 4. A threaded portion 18a of the bush 18 threadably engages the lead screw 8, which is static.

By the above arrangement, rotation of the splined shaft 13 effects rotation of the guide tubes 17 via the gear drive 23, which is turn effects rotation of the second reel 4. Rotation of the second reel 4 causes a concurrent axial movement of the second reel 4 by means of the threaded engagement of bush 18 with the static lead screw 8.

As also shown in Figure 6, the reeling device 21 further comprises a pair of holding brakes 12a, 12b, which are directly connected to a drum of the first reel 3.

The end guide 11 of the reeling device 21 comprises a guide wheel 11a and a pulley 11b. In the illustrated embodiment, the pulley 11b is arranged to direct the cable 2 in a direction parallel with the axis of the first reel 3 and second reel 4. In alternative arrangements, the pulley may direct the cable 2 in any desired direction.

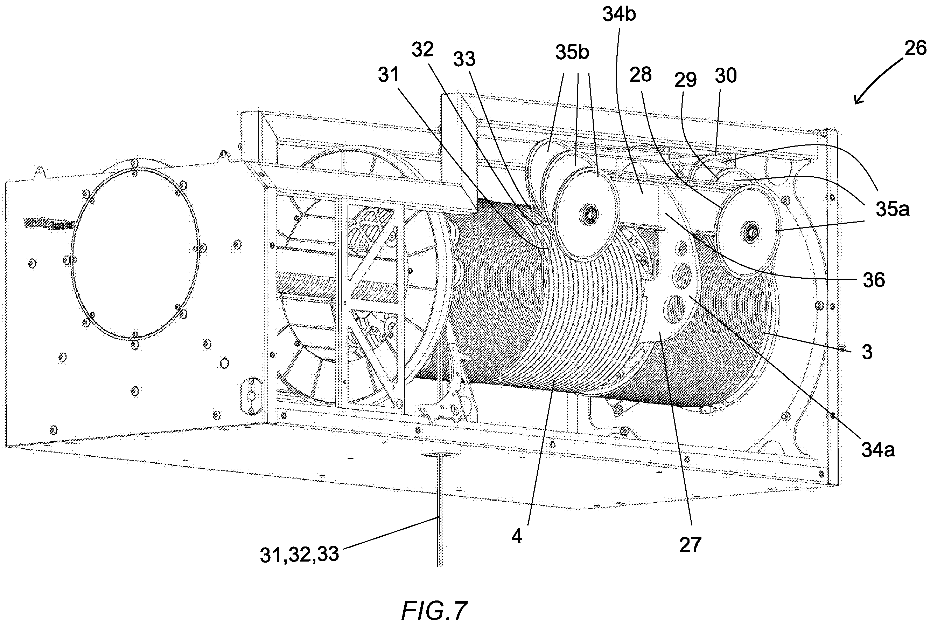

With reference to Figure 7, there is shown a reeling device 26 in accordance with a third embodiment of the present invention. Features in common with the first embodiment are indicated with like numerals.

The reeling device 26 of the third embodiment comprises an intermediate guide assembly 27 comprising a plurality of intermediate guides 28, 29, 30 for guiding a plurality of cables 31, 32, 33 between the first and second reels 3, 4. A first intermediate guide 28 guides a first cable 31, a second intermediate guide 29 guides a second cable 32 and a third intermediate guide 30 guides a third cable 33. Each of the first, second and third intermediate guides 28, 29, 30 may be arranged with respect to the first reel 3 and the second reel 4 in the same manner as the single intermediate guide 5 described above with respect to the first embodiment of the present invention.

According to this arrangement, the reeling device can be used for coiling/uncoiling multiple cables without tangling of the cables. It will be appreciated that any number of intermediate guides may be provided according to the number of cables to be coiled/uncoiled using the reeling device.

In the arrangement shown in Figure 7, the first, second and third intermediate guides 28, 29, 30 are rotationally fixed with respect to each other, such that the first, second and third intermediate guides 28, 29, 30 are rotatable about the axis with each other. Each intermediate guide comprises an arm 36 which comprises first and second guide members 35a, 35b, a support portion 34a and a bridge portion 34b. To achieve this rotation, the bridge portions 34b of the first, second and third intermediate guides 28, 29, 30 are all fixed to a common support portion 34a and thus form a unitary intermediate guide assembly 27. Rotation of the support portion 34a, and thus the first, second and third intermediate guides 28, 29, 30, is effected by rotation of a central shaft driven by a motor/servo drive of the reeling device 26, in substantially the same manner as described above with respect to the first embodiment of the present invention.

The first, second and third intermediate guides 28, 29, 30 guide the first, second and third cables 31, 32, 33, respectively, substantially tangentially with respect to the first reel 3 and the second reel 4 at all times during reeling and unreeling of the cable.

In the arrangement shown in Figure 7, each of the first, second and third intermediate guides 28, 29, 30 comprises the first guide member 35a and the second guide member 35b connected by the bridge portion 34b of the arm 36. Each first guide member 35a guides a respective one of the first, second and third cables 31, 32, 33 with respect to the first reel 3. Each second guide member 35b guides a respective one of the first, second and third cables 31, 32, 33 with respect to the second reel 4.

In the arrangement described above, the first, second and third intermediate guides 28, 29, 30 are substantially identical in structure. However, it will be appreciated that, in embodiments of the present invention comprising a plurality of intermediate guides, the respective intermediate guides may adopt different structures to each other according to the requirements of the cables to be coiled/uncoiled using the reeling device.

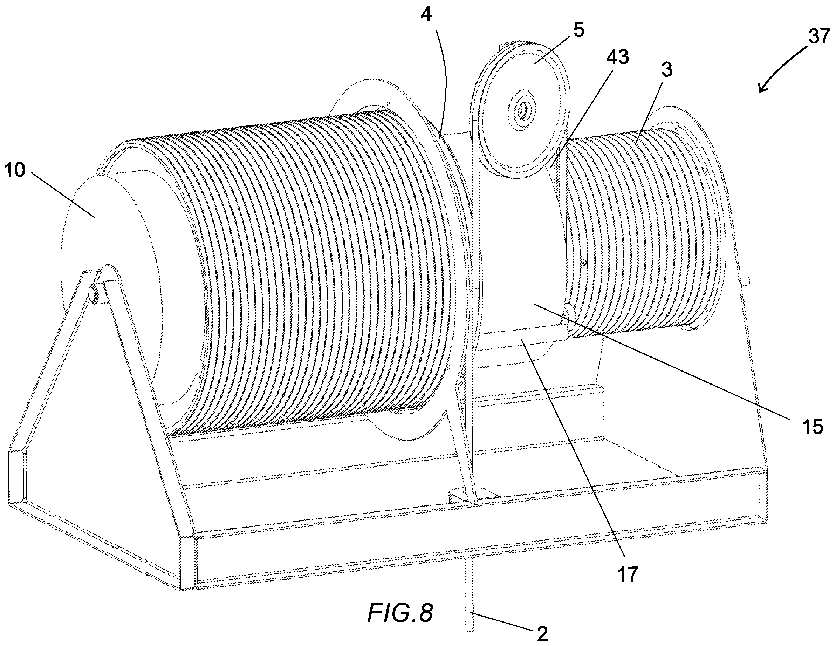

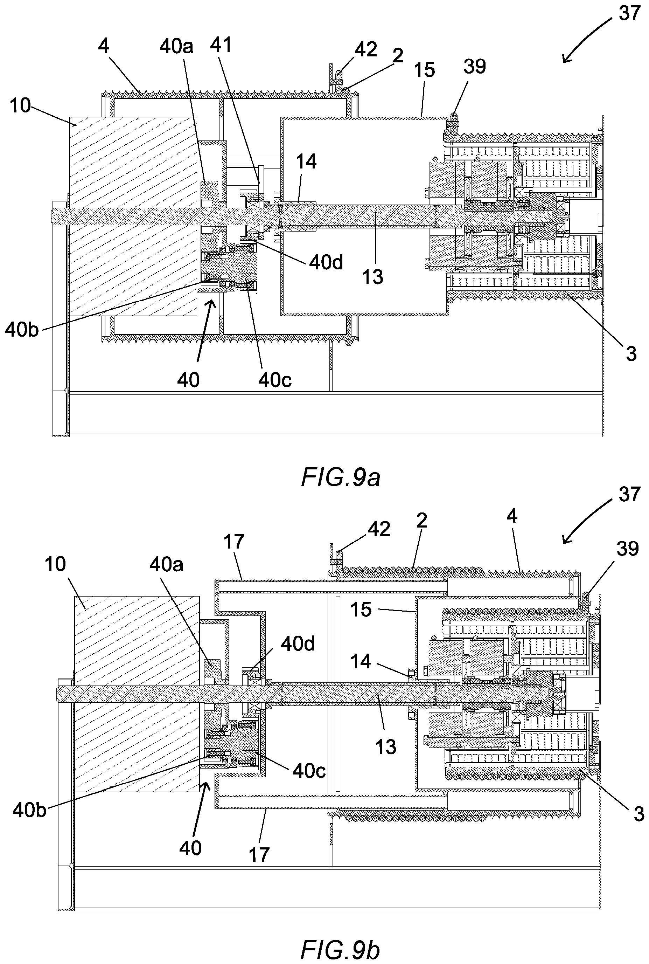

With reference to Figures 8, 9a and 9b, there is shown a reeling device 37 in accordance with a fourth embodiment of the present invention. Features in common with the first embodiment are indicated with like numerals.

In the arrangement shown, the diameter of the first reel 3 is smaller than the diameter of the second reel 4. Accordingly, it is possible for the second reel 4 to move from an axial position in which there is no overlap between the first and second reels 3, 4 when viewed in a radial direction, as shown in Figure 9a, to an axial position in which the first and second reels 3, 4 overlap when viewed in a radial direction, such that the second reel 4 surrounds the first reel 3, as shown in Figure 9B. This configuration offers a more compact arrangement, which may be particularly beneficial when the reeling device 37 is being used to coil/uncoil larger cables, which will require a relatively large motor.

As shown in Figure 8, the intermediate guide 5 is in the form of a single pulley. The diameter of the pulley is suitably set such that the points of the pulley at which the cable 2 is fed on/off the pulley are respectively axially aligned with the first and second reels 3, 4 at the points at which the cable 2 is fed on/off the first and second reels 3, 4.

The reeling device 37 comprises an alternative drive mechanism, which could also be used in any of the embodiments of the present invention hereinbefore described. With reference to Figures 9a and 9b, in particular, a motor/servo drive 10 rotates a splined shaft 13, which is fixed against axial movement. A splined bush 14 engages the spline of the splined shaft 13. The splined bush 14 is fixed to a hollow shaft 15, to which the intermediate guide 5 is fixed via arm 43 (shown in Figure 8). Rotation of the splined shaft 13 therefore effects rotation of the hollow shaft 15 and the intermediate guide 5.

A roller 39 is fixed to one end of the hollow shaft 15. The roller 39 engages with the helical grooves of the first reel 3. Accordingly, rotation of the hollow shaft 15 effects axial movement of the hollow shaft 15 and the intermediate guide 5 via the roller 39. In an alternative arrangement, a series of rollers may be provided, the rollers being arranged helically to engage with the helical grooves of the first reel 3.

A gear drive 40 is provided to transfer rotational movement of the splined shaft 13 to the second reel 4. A spur gear 40a is fixed to the splined shaft 13 to rotate therewith. Spur gear 40a engages with spur gear 40b, which is coaxially fixed with spur gear 40c. Rotation of spur gear 40b effects rotation of spur gear 40c. Spur gear 40c engages with spur gear 40d, which is mounted on the shaft 13 via bearings to allow for independent rotation of spur gear 40d about the shaft 13. Guide tubes 17 are fixed to spur gear 40d via connecting arm 41, such that the guide tubes 17 rotate with spur gear 40d. The guide tubes 17 are slidably received by the second reel 4 inside a drum of the second reel 4, such that the second reel 4 rotates with the guide tubes 17.

A roller 42 engages with the helical grooves of the second reel 4. The roller 42 is fixed against axial movement. Accordingly, rotational movement of the second reel 4 effects axial movement of the second reel 4 via the roller 42. In an alternative arrangement, a series of rollers may be provided, the rollers being arranged helically to engage with the helical grooves of the second reel 4.

By the above arrangement, rotation of the shaft 13 effects rotation and axial movement of the second reel 4.

The above exemplary described arrangements provide a number of non-limiting exemplary benefits, including but not limited to the following:
1. No break in the cable - so no degradation in signal quality/no interference.
2. Accurate single layer wrap for the cable - enabling accurate positioning of a microphone (or other reeled electrical device (or optical data device using a fibre optic cable)) with no compression of the cable.
3. Directly-coupled servo motor with positioning encoder - further enabling accuracy.
4. High loads are possible (6kg as configured in the depicted arrangement, compared to typical 1kg on existing prior-art devices) - enabling the use of microphone 'frames' carrying multiple microphones. The ability to support such frames is enhanced by the ability to accurately position them, in line with 2 and 3 above.
5. An adequately-sized holding brake on the output side of a drive gearbox (if used), directly connected to the splined shaft. Also, positive-break, direct struck limit switches. The brake and limit arrangement complies with current regulations pertaining to lifting loads over an audience.
6. Adaptability - the device can be adapted to virtually any load/cable-type/stroke requirement.
7. Virtually no cable is retained in the device when the cable is fully deployed, minimising cable run distance.
8. The reeling device is 'zero fleet' i.e. the radial and axial location and the orientation of the portion of the cable adjacent the second end of the cable that is fed on/off the second reel does not change during reeling and unreeling of the cable. This provides the ability to locate the device directly over a hole in an auditorium ceiling for example.

The invention has been described above with reference to specific embodiments, given by way of example only. It will be appreciated that many different arrangements of the system are possible, which fall within the scope of the appended claims.

## Claims

1. A reeling device (1) for the controlled coiling and uncoiling of a cable (2) having a first end (2a) that is fixed and a second end (2b) that is movable relative to the first end (2a), the cable (2) is unbroken between its first and second ends, the reeling device comprises first and second reels about which the cable (2) is coiled, wherein the first and second reels are coaxial, the first reel (3) is fixed against rotation and axial movement, and the second reel (4) is rotatable about the axis with such rotation causing axial movement of the second reel (4) relative to the first reel (3).

2. A reeling device as claimed in Claim 1, wherein an intermediate guide (5) is provided for guiding the cable (2) between the first and second reels, and optionally wherein the intermediate guide (5) is rotatable about the axis and rotation of the intermediate guide (5) causes axial movement of the intermediate guide (5).

3. A reeling device as claimed in Claim 2, wherein the rotation and axial movement of the second reel (4) are proportional to the rotation and axial movement of the intermediate guide (5), and optionally wherein a gear drive (9) is provided for maintaining proportionality of the rotational and axial movement between the second reel (4) and the intermediate guide (5).

4. A reeling device as claimed in Claims 2 or 3, wherein the intermediate guide (5) comprises an arm (6), which comprises one or more guide members for guiding the cable (2) with respect to the first and second reels, and optionally wherein the arm (6) comprises first and second guide members and the first guide member (7a) overlaps with the first reel (3) and the second guide member (7b) overlaps with the second reel (4).

5. A reeling device as claimed in Claim 4, wherein the one or more guide members each comprise one or more pulleys.

6. A reeling device as claimed in Claims 4 or 5, wherein the one or more guide members are retained in tangential alignment with the first and second reels respectively at all times.

7. A reeling device as claimed in any preceding claim, wherein the first and second reels have the same diameter.

8. A reeling device as claimed in Claim 7, when dependent on Claim 3, wherein the rotation and axial movement of the second reel (4) are double the speed of the rotation and axial movement of the intermediate guide (5).

9. A reeling device as claimed in any one of claims 1 to 6, wherein the first and second reels have different diameters, and optionally wherein the diameter of the first reel (3) is smaller than the diameter of the second reel (4) and wherein the second reel (4) is optionally arranged to surround at least a portion of the first reel (3) in at least one axial position of the second reel (4).

10. A reeling device as claimed in any preceding claim, wherein the cable (2) is helically coiled about each of the first and second reels in a single layer without overlap, and optionally wherein the first reel (3) and/or the second reel (4) comprises a helical groove for receiving the cable (2).

11. A reeling device as claimed in any preceding claim wherein an end guide (11) is provided for guiding the cable (2) on and off the second reel (4), and optionally wherein the end guide (11) is fixed against axial movement.

12. A reeling device as claimed in Claim 11, wherein the end guide (11) comprises a guide wheel (11a).

13. A reeling device as claimed in any preceding claim comprising an electromagnetic brake (12) on an output side of a motor drive gearbox, and optionally wherein the electromagnetic brake (12) is directly connected to the first reel (3).

14. A reeling device as claimed in any of Claims 2 to 13, comprising a plurality of intermediate guides (28, 29, 30) for guiding a plurality of cables (31, 32, 33) between the first and second reels, wherein each intermediate guide is arranged to guide a respective one of the plurality of cables between the first and second reels, and optionally wherein each of the intermediate guides is fixed for rotation with the other intermediate guides.

15. A system comprising a plurality of reeling devices as claimed in any preceding claim and a frame or device that is supported at the second ends of the cables of the plurality of reeling devices, wherein a controller is provided for synchronously coiling/uncoiling the cables for raising or lowering the frame or device.

## Patentansprüche

1. Spulenvorrichtung (1) zum kontrollierten Auf- und Abwickeln eines Kabels (2) mit einem ersten Ende (2a) und einem zweiten Ende (2b), das relativ zum ersten Ende (2a) beweglich ist, wobei das Kabel (2) zwischen seinen ersten und zweiten Enden ungebrochen ist, die Spulenvorrichtung erste und zweite Spulen umfasst, um die das Kabel (2) gewickelt wird, wobei die ersten und zweiten Spulen koaxial sind, die erste Spule (3) gegen Rotation und axiale Bewegung fixiert ist, und die zweite Spule (4) um die Achse drehbar ist, wobei eine solche Rotation eine axiale Bewegung der zweiten Spule (4) relativ zur ersten Spule (3) verursacht.

2. Spulenvorrichtung wie in Anspruch 1 beansprucht, wobei eine Zwischenführung (5) zur Führung des Kabels (2) zwischen den ersten und zweiten Spulen bereitgestellt ist, und optional wobei die Zwischenführung (5) um die Achse drehbar ist und die Rotation der Zwischenführung (5) axiale Bewegung der Zwischenführung (5) verursacht.

3. Spulenvorrichtung wie in Anspruch 2 beansprucht, wobei die Rotation und axiale Bewegung der zweiten Spule (4) proportional zur Rotation und axialen Bewegung der Zwischenführung (5) sind, und optional wobei ein Zahnradgetriebe (9) zur Beibehaltung von Proportionalität der Rotation und axialen Bewegung zwischen der zweiten Spule (4) und der Zwischenführung (5) bereitgestellt ist.

4. Spulenvorrichtung wie in Ansprüchen 2 oder 3 beansprucht, wobei die Zwischenführung (5) einen Arm (6) umfasst, der ein oder mehrere Führungselemente zur Führung des Kabels (2) in Bezug auf die ersten und zweiten Spulen umfasst, und optional wobei der Arm (6) erste und zweite Führungselemente umfasst und sich das erste Führungselement (7a) mit der ersten Spule (3) überlappt und sich das zweite Führungselement (7b) mit der zweiten Spule (4) überlappt.

5. Spulenvorrichtung wie in Anspruch 4 beansprucht, wobei das eine oder mehrere Führungselemente jeweils eine oder mehrere Rollen umfassen.

6. Spulenvorrichtung wie in Ansprüchen 4 oder 5 beansprucht, wobei das eine oder mehrere Führungselemente jederzeit in tangentialer Ausrichtung mit den ersten bzw. zweiten Spulen gehalten werden.

7. Spulenvorrichtung wie in irgendeinem vorhergehenden Anspruch beansprucht, wobei die ersten und zweiten Spulen den gleichen Durchmesser aufweisen.

8. Spulenvorrichtung wie in Anspruch 7 beansprucht, wenn von Anspruch 3 abhängig, wobei die Rotation und axiale Bewegung der zweiten Spule (4) doppelt so schnell wie Geschwindigkeit der Rotation und axialen Bewegung der Zwischenführung (5) sind.

9. Spulenvorrichtung wie in irgendeinem der Ansprüche 1 bis 6 beansprucht, wobei die ersten und zweiten Spulen verschiedene Durchmesser aufweisen, und optional wobei der Durchmesser der ersten Spule (3) kleiner als der Durchmesser der zweiten Spule (4) ist, und wobei die zweite Spule (4) optional eingerichtet ist, zumindest einen Teil der ersten Spule (3) in zumindest einer axialen Position der zweiten Spule (4) zu umgeben.

10. Spulenvorrichtung wie in irgendeinem vorhergehenden Anspruch beansprucht, wobei das Kabel (2) in einer einzigen Schicht ohne Überlappung spiralförmig um jede der ersten und zweiten Spulen gewickelt wird, und optional wobei die erste Spule (3) und/oder die zweite Spule (4) eine spiralförmige Nut zur Aufnahme des Kabels (2) umfasst.

11. Spulenvorrichtung wie in irgendeinem vorhergehenden Anspruch beansprucht, wobei eine Endführung (11) zum Führen des Kabels (2) auf und von der zweiten Spule (4) bereitgestellt ist, und optional wobei die Endführung (11) gegen axiale Bewegung fixiert ist.

12. Spulenvorrichtung wie in Anspruch 11 beansprucht, wobei die Endführung (11) ein Führungsrad (11a) umfasst.

13. Spulenvorrichtung wie in irgendeinem vorhergehenden Anspruch beansprucht, die eine elektromagnetische Bremse (12) auf einer Abtriebsseite eines Motorantriebsgetriebes umfasst, und optional wobei die elektromagnetische Bremse (12) direkt mit der ersten Spule (3) verbunden ist.

14. Spulenvorrichtung wie in irgendeinem der Ansprüche 2 bis 13 beansprucht, die eine Vielzahl von Zwischenführungen (28, 29, 30) zur Führung einer Vielzahl von Kabeln (31, 32, 33) zwischen den ersten und zweiten Spulen umfasst, wobei jede Zwischenführung eingerichtet ist, ein jeweiliges der Vielzahl von Kabeln zwischen den ersten und zweiten Spulen zu führen, und optional wobei jede der Zwischenführungen zur Rotation mit den anderen Zwischenführungen fixiert ist.

15. System, das eine Vielzahl von Spulenvorrichtungen wie in irgendeinem vorhergehenden Anspruch beansprucht und einen Rahmen oder eine Vorrichtung umfasst, der/die an den zweiten Enden der Kabel der Vielzahl von Spulenvorrichtungen gestützt wird, wobei ein Controller zum synchronen Aufwickeln/Abwickeln der Kabel zum Heben oder Absenken des Rahmens oder der Vorrichtung bereitgestellt ist.

## Revendications

1. Un dispositif de bobinage (1) conçu pour effectuer un bobinage et un débobinage contrôlés d'un câble (2) dont une première extrémité (2a) est fixe alors que la deuxième extrémité (2b) peut se déplacer par rapport à la première extrémité (2a), et le câble (2) ne se casse pas entre sa première extrémité et sa deuxième extrémité, et ce dispositif de bobinage comporte une première bobine et une deuxième bobine autour desquelles le câble (2) vient s'enrouler, et cette première bobine et cette deuxième bobine sont coaxiales, et la première bobine (3) est fixe en ce qui concerne les déplacements en rotation et sur le plan axial, alors que la deuxième bobine (4) tourne autour de son axe et cette rotation entraîne un déplacement axial de la deuxième bobine (4) par rapport à la première bobine (3).

2. Le dispositif de bobinage que décrit la revendication 1, si ce n'est qu'un guide intermédiaire (5) vient s'insérer pour guider le câble (2) entre la première bobine et la deuxième bobine et si ce n'est, en option, que ce guide intermédiaire (5) peut tourner sur son axe et que cette rotation du guide intermédiaire (5) entraîne un déplacement axial du guide intermédiaire (5).

3. Le dispositif de bobinage que décrit la revendication 2, si ce n'est que la rotation et le déplacement axial de la deuxième bobine (4) sont proportionnels à la rotation et au déplacement axial du guide intermédiaire (5) et, en option, si ce n'est qu'un entraînement par engrenages (9) maintient la proportionnalité de la rotation et du déplacement axial entre la deuxième bobine (4) et le guide intermédiaire (5).

4. Le dispositif de bobinage que décrit la revendication 2 ou 3, si ce n'est que le guide intermédiaire (5) comporte un bras (6) qui a un ou plusieurs éléments de guidage qui guide(nt) le câble (2) par rapport à la première bobine et à la deuxième bobine et si ce n'est, en option, que ce bras (6) comporte un premier élément de guidage et un deuxième élément de guidage et que le premier élément de guidage (7a) chevauche la première bobine (3) et que le deuxième élément de guidage (7b) chevauche la deuxième bobine (4).

5. Le dispositif de bobinage que décrit la revendication 4, si ce n'est que le ou les éléments de guidage comporte(nt) chacun une ou plusieurs poulies.

6. Le dispositif de bobinage que décrit la revendication 4 ou 5, si ce n'est que le ou les éléments de guidage est ou sont implantés avec un alignement tangentiel permanent par rapport, respectivement, à la première bobine et à la deuxième bobine.

7. Le dispositif de bobinage que décrit l'une ou l'autre des revendications précédentes, si ce n'est que la première bobine et la deuxième bobine ont le même diamètre.

8. Le dispositif de bobinage que décrit la revendication 7, si ce n'est, en fonction de la revendication 3, que la rotation et le déplacement axial de la deuxième bobine (4) sont deux fois plus rapides que la rotation et le déplacement axial du guide intermédiaire (5).

9. Le dispositif de bobinage que décrit l'une ou l'autre des revendications 1 à 6, si ce n'est que la première bobine et la deuxième bobine ont des diamètres différents et si ce n'est, en option, que le diamètre de la première bobine (3) est inférieur au diamètre de la deuxième bobine (4) et si ce n'est que la deuxième bobine (4), en option, entoure, au moins partiellement, la première bobine (3) au niveau d'au moins une position axiale de la deuxième bobine (4).

10. Le dispositif de bobinage que décrit l'une ou l'autre des revendications précédentes, si ce n'est que le câble (2) a un enroulement hélicoïdal autour de la première bobine et de la deuxième bobine, sur une couche, sans chevauchement, et si ce n'est, en option, que la première bobine (3) et (ou) la deuxième bobine (4) comporte(nt) une rainure hélicoïdale dans laquelle le câble (2) vient s'insérer.

11. Le dispositif de bobinage que décrit l'une ou l'autre des revendications précédentes, si ce n'est qu'un guide d'extrémité (11) est prévu pour guider le câble (2) sur la deuxième bobine (4) et s'en écarter, et si ce n'est, en option, que ce guide d'extrémité (11) est fixe pour empêcher tout déplacement axial.

12. Le dispositif de bobinage que décrit la revendication 11, si ce n'est que le guide d'extrémité (11) comporte une roue de guidage (11a).

13. Le dispositif de bobinage que décrit l'une ou l'autre des revendications précédentes, si ce n'est qu'il comporte un frein électromagnétique (12) implanté sur un côté sortie d'une boîte de transmission mécanique et, en option, si ce n'est que ce frein électromagnétique (12) est directement relié à la première bobine (3).

14. Le dispositif de bobinage que décrit l'une ou l'autre des revendications 2 à 13, si ce n'est qu'il comporte une pluralité de guides intermédiaires (28, 29, 30) conçus pour guider une pluralité de câbles (31, 32, 33) entre la première bobine et la deuxième bobine, et si ce n'est que chaque guide intermédiaire est implanté pour guider, respectivement, un câble de la pluralité de câbles entre la première bobine et la deuxième bobine et, en option, si ce n'est que chaque guide intermédiaire est fixé pour assurer une rotation avec les autres guides intermédiaires.

15. Le système comportant une pluralité de dispositifs de bobinage que décrit l'une ou l'autre des revendications précédentes et un cadre ou un dispositif qui est soutenu au niveau des deuxièmes extrémités des câbles de la pluralité de dispositifs de bobinage, si ce n'est qu'un régulateur est prévu pour assurer, de manière synchrone, le bobinage/débobinage des câbles afin de relever ou abaisser le cadre ou le dispositif.
